# EUROPEAN PATENT APPLICATION

(11) **EP 2 960 898 A1**
(43) Date of publication of application: **30.12.2015**
(21) Application number: 15153868.3
(22) Date of filing: 04.02.2015
(51) Int. Cl.: G09G 5/14

(54) **Image data creation device and programmable display device**

(30) Priority: 26.06.2014 JP 2014131713
(71) Applicant: Digital Electronics Corporation, Osaka 541-0041 (JP)
(72) Inventor: Kobayashi, Hideki, OSAKA,, Osaka 541-0041 (JP); Howard, Kevin, OSAKA,, Osaka 541-0041 (JP)
(74) Representative: Cabinet Plasseraud

(57) **Abstract**

A PC includes (i) a cell setting section which divides a background image into a plurality of cells and defines a position and a size of the plurality of cells and (ii) a component setting section which, in a case where an operation, in which a component image is arranged with respect to the background image, is conducted, (a) determines in which one of the plurality of the plurality of cells the component image should be arranged, (b) associates the component image with the cell in which the component image has been arranged, and (c) carries out setting so that the component image is displayed, in the cell associated with the component image in component setting data, in a position or a size in accordance with a size of the cell.

## Description

### Technical Field

The present invention relates to an image data creation device which creates image data and a programmable display device which displays an image in accordance with the image data.

### Background Art

It has been conventionally known a programmable display device which displays an operational status of a device connected to a programmable logic controller (PLC) and which accepts various operations such as an instruction to the PLC. The programmable display device includes a display device/input device such as a touch panel monitor and displays images of (i) a component which indicates operational statuses of a meter and the like and (ii) components, such as a switch and a button, which accept user's operations. Data of the image is generally created by an information processing device such as a personal computer (PC) and is then downloaded to the programmable display device.

In recent years, a technique related to the preparation of an image (creation of an image) has been developed. For example, Patent Literature 1 discloses a technique of altering, in a programmable display device, a component arrangement in an image which is being displayed. Patent Literature 2 discloses a technique of further simplifying a component arrangement during creation of an image.

### Citation List

### Patent Literatures

Patent Literature 1
   Japanese Patent Application Publication, Tokukai, No. 2013-161376 A (Publication Date: August 19, 2013)
Patent Literature 2
   Japanese Patent Application Publication, Tokukai, No. 2011-3145 A (Publication Date: January 6, 2011)

### Summary of Invention

### Technical Problem

Even with the use of techniques disclosed in respective Patent Literatures 1 and 2, a user still needs a positioning adjustment of a component in creation of an image. Accordingly, the creation of an image has been trouble to a user who is not used to the creation of an image. Particularly, in a case where a first user, different from a second user who has created an image, alters, on the programmable display device, a component arrangement in the image thus drawn, the first user may not be always used to the creation of an image. Accordingly, even in a case where image data is alterable on the programmable display device, there was a possibility that a user could not make fully used such a function of altering the creation of an image.

The present invention has been made in view of the problems, and an object of the present invention is to provide (i) an image data creation device which is capable of facilitating creation of data of an image to be displayed by a programmable display device and (ii) the programmable display device.

### Solution to Problem

In order to attain the object, an image data creation device of one aspect of the present invention is an image data creation device including: a rectangular region setting section which divides a background image which is an image displayed, as a background, on a programmable display device into a plurality of rectangular regions and defines a position and a size of each of the plurality of rectangular regions; and a component setting section which, in a case where an operation, in which a component image, which is an image of a component that is at least one of an object for having a given function and an object for displaying given data, is arranged with respect to the background image, is conducted, (a) determines in which one of the plurality of rectangular regions the component image should be arranged, (b) defines component setting in which the rectangular region which is in the background image and in which the component image has been arranged is associated with the component image, and (c) carries out setting so that the component image is displayed, in the rectangular region with which the component image is associated in the component setting, in a position or a size in accordance with a size of the rectangular region.

### Advantageous Effects of Invention

The present invention brings about an effect of facilitating creation of image data displayed by a programmable display device.

### Brief Description of Drawings

Fig. 1 is a block diagram illustrating configurations of respective of personal computer and programmable display device in accordance with an embodiment and another embodiment of the present invention.
Fig. 2 is a view specifically illustrating an example of a cell setting in the personal computer.
Fig. 3 is a view specifically illustrating an example of a component setting in the personal computer.
Fig. 4 is a view illustrating an example of a data structure of component setting data to be created by the personal computer.
Fig. 5 is a view illustrating an example of an image which the programmable display device displays.
Fig. 6 is a view illustrating, in an example of an image which the programmable display device controls the display panel to display, (i) an operation to be conducted in a case where a user alters the cell setting and (ii) the image which has been subjected to such an alteration.
Fig. 7 is a view illustrating, in an example of an image which the programmable display device controls the display panel to display, (i) an operation to be conducted in a case where a user alters the component setting and (ii) the image which has been subjected to such an alteration.
Fig. 8 is a view illustrating another example of the cell setting and the component setting in the personal computer.

### Description of Embodiments

The following description will discuss in detail an embodiment of the present invention.

### [Embodiment]

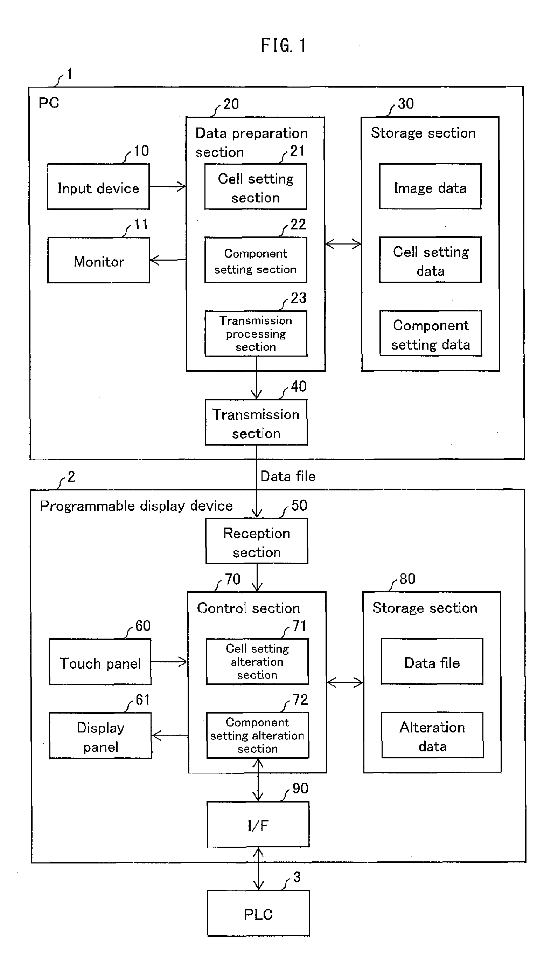

The following description will discuss an embodiment of the present invention with reference to Figs. 1 through 8. First, configurations of various devices in accordance with the present embodiment will be discussed with reference to Fig. 1.

Fig. 1 is a block diagram illustrating configurations of respective of personal computer and programmable display device in accordance with Embodiment 1. The present embodiment employs a programmable display device 2, a personal computer (PC) 1 (an image data creation device) which creates data (a data file) to be used by the programmable display device 2, and a PLC 3 which serves as an external device of the programmable display device 2.

The programmable display device 2 is connected to the PC 1 and the PLC 3 so as to communicate with them. The PC 1 creates data and transmits the data thus created to the programmable display device 2. The PLC 3 collects data and transmits the data thus collected to the programmable display device 2.

The PC 1 is a general purpose computer on which an OS (Operating System) is mounted. The PC 1 includes (i) an input device 10 which accepts a user's input operation, (ii) a data preparation section 20 which prepares a data file in accordance with the user's input operation, (iii) a storage section 30 which stores therein various types of data, (iv) a transmission section 40 which transmits a data file to the programmable display device 2, and (v) a monitor 11 for displaying a GUI (Graphical User Interface).

Note that, in addition to the aforementioned sections, the PC 1 can be configured to include configurations, which are generally included in a general purpose computer, such as a CPU (Central Processing Unit), a memory, a storage device, and a communication interface.

The data preparation section 20 determines a size of an image (a background image) to be displayed, as a background, on the programmable display device 2. The data preparation section 20 prepares cell setting data and component setting data, each of which is data indicative of various definitions with respect to the background image. The data preparation section 20 then stores, in the storage section 30, the cell setting data and component setting data thus prepared and image data.

The following description will discuss the image data, the cell setting data, and the component setting data.

The image data is data indicative of an image to be displayed on the programmable display device 2, out of various images stored in the storage section 30. The image data contains a background image and an image of a component (a component image) to be displayed on (a top of) the background image. The "component" indicates at least one of an object which has a given function (e.g., a switch, a lamp, and a meter) and an object which simply displays given data (e.g., an image object and a text box).

The cell setting data is data indicative of various definitions (cell settings) of respective given rectangular regions (cells) into which the background image is divided. The cell setting data contains at least (a) information indicative of positions of the respective cells and (b) information indicative of sizes of the respective cells. According to the present embodiment, (i) the cell setting data contains, as information indicative of a position of a cell, a cell number (a row number and a column number of a cell) and (ii) the cell setting data contains, as information indicative of a size of a cell, a height of each row and a width of each column. Note that, according to the present embodiment, (i) a shape and a color of a component image, which has not been arranged in a cell, is defined, whereas information on a size of the component image is not defined and (ii) after the component image has been arranged in the cell, the component image is to be displayed in a size in accordance with the size of the cell in which the component image has been arranged.

The component setting data is data indicative of various definitions (component settings) of components. The component setting data contains (i) information specifying a component, (ii) information specifying a cell in which the component has been arranged, (iii) information indicative of a size of a component image (a display size of a component image), and (iv) information indicative of an address to which is referred in a case where a component is displayed and a case where the component thus displayed is altered. Note that the address indicates a storage region which stores therein (i) data which alters a display state of a component image (e.g., on/off of a switch and on/off of a lamp) and (ii) data which alters in accordance with an operation (a touch) to be conducted with respect to the component image.

In a case where a component image is arranged in a cell, component setting data regarding the component is prepared. A display size of the component image (i) is determined when the component image is arranged in a cell and (ii) is then stored in the component setting data.

The data preparation section 20 causes the storage section 30 to store therein a data file in which the image data, the cell setting data, and the component setting data are put together.

The data preparation section 20 includes (a) a cell setting section 21 (rectangular region setting section) for preparing cell setting data and (b) a component setting section 22 for preparing component setting data. The data preparation section 20 further includes a transmission processing section 23 which carries out transmission processing in a case where a data file is transmitted to the programmable display device 2.

The cell setting section 21 divides a background image corresponding to one (1) screen into an arbitrary number of cells and then prepares cell setting data indicative of cell settings of the respective cells. The cell setting will be later described in detail. The cell setting section 21 can alter the cell setting and update the cell setting data in accordance with such an alteration. In a case where the cell setting section 21 alters the cell setting, the cell setting section 21 notifies the component setting section 22 of such an alteration.

In accordance with (i) an alteration in cell setting notified by the cell setting section 21, (ii) an alteration in size of the background image notified by the data preparation section 20, or (iii) a user's given operation, the component setting section 22 defines a position (an arrangement) and a display size of a component image to be displayed on a background image. According to the present embodiment, the component setting section 22 defines a position and a display size of a component image so that component images belong to respective cells. According to the present embodiment, a cell including a point that a user specifies via the input device 10 (a point that a user specifies by use of a pointing device) is determined as a cell in which a component image is to be arranged.

The component setting section 22 defines an address with respect to each component. In a case where a state in which a component is displayed alters in accordance with a data value indicated by the address thus defined, the component setting section 22 can define, in advance, a threshold which causes such an alteration.

The component setting section 22 prepares component setting data in which (i) information specifying a cell in which a component image has been arranged, (ii) a display size of the component image which display size has been set, and (iii) an address of a component are associated with information specifying the component. Note that the component arrangement and the address definition will be later discussed in detail.

The transmission processing section 23 carries out processing required for transmitting a data file, stored in the storage section 30, to the programmable display device 2. Specifically, the transmission processing section 23 convers the data file into a file in a file format executable by the programmable display device 2. The transmission processing section 23 then transmits the file to the programmable display device 2, via the transmission section 40, in accordance with a transmission instruction from a CPU of the PC 1.

The storage section 30 stores therein a data file. The data file is made up of at least image data, cell setting data, and component setting data. The storage section 30 also stores therein data indicative of various component images and a background image (not shown).

Note that the storage section 30 can be a storage device, such as an HDD (Hard Disk Drive) and an SSD (Solid State Drive), which is built in the PC 1. Alternatively, the storage section 30 can be an external storage device, such as an SD memory card, a USB (Universal Serial Bus) flash memory, and a DVD (Digital Versatile Disc), which is accessible via a given interface or drive of the PC 1.

The following description will discuss a configuration of the programmable display device 2. The programmable display device 2 is a computer which accepts a user's instruction operation and displays an image including various components to be displayed. The programmable display device 2 is an HMI (Human Machine Interface) device.

The programmable display device 2 has at least (i) a display function of displaying an image in accordance with image data, cell setting data, and component setting data which are contained in a data file received from the PC 1, (ii) an operation function of accepting a user's input via an screen on which the image is displayed, and (iii) a setting alteration function of altering a cell setting and a component setting which are indicated by the cell setting data and the component setting data, respectively, which are contained in the data file.

In order to realize these functions, the programmable display device 2 includes (i) a reception section 50 which communicates with the PC 1 so as to receive a data file from the PC 1, (ii) a control section 70 (a display control section) which collectively controls the programmable display device 2, (iii) a display panel 61 (a display section) which displays an image, (iv) a touch panel 60 which accepts a touch on the display panel 61, and (v) an I/F 90 which communicates with the PLC 3, and (vi) a storage section 80 which stores therein (a) the data file and (b) data altered by the setting alteration function (i.e., alteration data).

According to the present embodiment, the programmable display device 2 is a device including the touch panel 60 (an input device) and the display panel 61 (an output device). Note, however, that the programmable display device 2 is not limited to such a device configuration. For example, the programmable display device 2 can be configured such that a display, including a touch panel 60 and a display panel 61, is connected to a device, such as an industrial computer, in which neither touch panel 60 nor display panel 61 is provided.

Examples of the display panel 61 encompass a flat display device such as a liquid crystal display. The touch panel 60 is provided so as to be superimposed on the display panel 61. This allows an input by a touch on the display panel 61.

The control section 70 collectively controls the programmable display device 2. In order to realizes an input function and an output function, the control section 70 displays an image on the display panel 61 in accordance with image data contained in a data file stored in the storage section 80. More specifically, the control section 70 magnifies or reduces, as needed, a background image contained in image data so that the background image has a size in accordance with a size of a display screen of the display panel 61 and then displays the background image thus magnified or reduced. A cell setting alteration section 71 is notified of a display magnification of the background image (a magnification ratio or a reduction ratio in a vertical direction and a horizontal direction).

Moreover, upon receipt of a user's instruction operation to the image given via a touch on the touch panel 60, the control section 70 controls an operation of the programmable display device 2. In addition, the control section 70 communicates with the PLC 3, so as to acquire data that the PLC 3 has obtained from a device which the PLC 3 controls. The control section 70 alters a state, in which a component image is displayed, in accordance with an address indicated by the data and component setting data included in a data file.

The control section 70 further has a function of altering cell setting data and component setting data which are contained in a data file received from the PC 1. The control section 70 includes (i) the cell setting alteration section 71 (rectangular region setting alteration section) for altering the cell setting data and (ii) a component setting alteration section 72 for altering the component setting data. The control section 70 prepares alteration data containing (i) a cell setting altered by the cell setting alteration section 71 and (ii) a component setting altered by the component setting alteration section 72 and then causes the storage section 80 to store therein the alteration data thus prepared.

The cell setting alteration section 71 alters cell setting data contained in a data file received from the PC 1. Specifically, the cell setting alteration section 71 alters, in a cell setting, at least one of a height of each row and a width of each column in accordance with an alteration, in display magnification of the background image, which is notified by the control section 70. That is, in a case where a size of the background image is altered in accordance with a size of the display panel 61, the cell setting alteration section 71 alters a size of each cell which size is defined with respect to the background image.

The cell setting alteration section 71 further alters a cell setting (at least one of a height of each row and a width of each column) in accordance with a user's instruction entered via the touch panel 60. An operation of the cell setting alteration section 71 will be later described. In a case where the cell setting alteration section 71 alters the cell setting, the cell setting alteration section 71 notifies the component setting alteration section 72 of such an alteration.

The component setting alteration section 72 alters component setting data contained in a data file. Specifically, in accordance with a user's instruction entered via the touch panel 60, the component setting alteration section 72 alters an arrangement of a component with respect to the background image. In a case where the component setting alteration section 72 is notified of an alteration in cell setting by the cell setting alteration section 71, the component setting alteration section 72 alters a display size of a component image in accordance with a size of a cell subjected to such an alteration. An operation of the component setting alteration section 72 will be later described.

The storage section 80 stores therein (i) a data file received from the PC 1 and (ii) alteration data. Note that the storage section 80 can be a storage device built in the programmable display device 2. Alternatively, the storage section 80 can be an external storage device to be connected to the programmable display device 2 via a given interface.

The following description will discuss the PLC 3. The PLC 3 is a control device which controls a target system to be controlled. The target system is made up of various devices arranged in a manufacturing line or the like (an output device such as a motor, and an input device such as a sensor). The PLC 3 is a control device which controls the target system in accordance with a logic program that defines an operation of the target system. The PLC 3 is connected to the programmable display device 2 so as to communicate with the programmable display device 2.

The logic program is prepared by a user, and defines in advance, by use of a ladder program or the like, (a) a series of operations of a target system to be controlled by the PLC 3 and (b) a procedure such as an output of data to the programmable display device 2. The PLC 3 (i) executes the logic program, so as to monitor and control an operation of the target system in accordance with a procedure defined by the logic program and (ii) collects data from the target system. The data thus collected is supplied to the programmable display device 2.

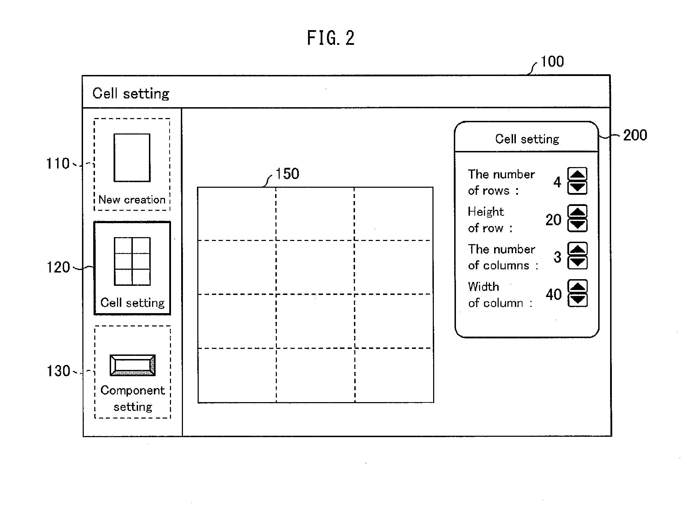

With reference to Figs. 2 through 4, the following description will discuss in detail preparation of various types of data by the data preparation section 20 of the PC 1. Note that images illustrated in the drawings below are illustrative only. The invention in accordance with the present embodiment is neither limited to the images nor to operation procedures illustrated in the drawings.

Upon receipt of an instruction operation, entered via the input device 10, of starting preparation of an image (creation of an image) which the programmable display device 2 displays, the data preparation section 20 of the PC 1 controls the monitor 11 to display a GUI which accepts an operation related to the creation of an image. Note that the GUI is, hereinafter, referred to as an "image creation window."

In accordance with a user's instruction operation to the image creation window, the PC 1 makes a determination of a size of a background image, cell setting, and component setting (component arrangement and address definition). The following description will explain on the premise that (i) the determination of the size of the background image, (ii) the cell setting, and (ii) the component setting are carried out in this order. Note, however, that the order in which these processes are carried out is not limited to a specific one. For example, it is possible to carry out the cell setting again after the component setting is carried out. Alternatively, it is possible to alter the size of the background image after the component setting and the cell setting are carried out. Note that the determination of the size of the background image, the cell setting, and the component setting can be repeatedly carried out.

Fig. 2 illustrates an example of an image displayed in a case where the data preparation section 20 determines a size of a background image and the cell setting section 21 carries out the cell setting.

The data preparation section 20 determines a size of a background image 150 in accordance with a user's instruction operation. Specifically, in a case where a user selects a new creation icon 110 displayed on a side menu, the data preparation section 20 controls an image creation window 100 to display the background image 150. In this case, the data preparation section 20 can cause the user to enter or select a size of the background image (e.g., the number of pixels in each of a horizontal direction and a vertical direction).

In a case where a user selects a cell setting icon 120 displayed on the side menu in a state where the background image 150 is being displayed on the image creation window 100, the cell setting section 21 controls the monitor 11 to display a cell setting window 200 on the image creation window 100. The cell setting window 200 is a sub-window via which a user can set values of various types of data related to the cell setting. As illustrated in Fig. 2, the number of rows of cells, a height of each row, the number of columns of the cells, and a width of each column are displayed on the cell setting window 200 so that the user can set them. According to the example in Fig. 2, all the rows have identical heights whereas all the columns have identical widths. Note, however, that a height of each row and a width of each column can be set for each row and each column, respectively.

In a case where a user defines, via the cell setting window 200, the number of rows of cells, a height of each row, the number of columns of the cells, a width of each column of the cell, the entire background image 150 displayed on the image creation window 100 is divided into cells in accordance with the number of rows of cells, the height of each row, the number of columns of the cells, the width of each column of the cell thus defined (see a part indicated by a dotted line in the background image 150). Note that, in a case where the cell setting section 21 starts the definition of the cell setting (in a case where the cell setting icon 120 is selected by the user), it is possible that the cell setting section 21 automatically carries out a cell setting as an initial setting in accordance with a size of the background image or the like and then controls the initial setting to be displayed on the cell setting window 200 and the background image 150.

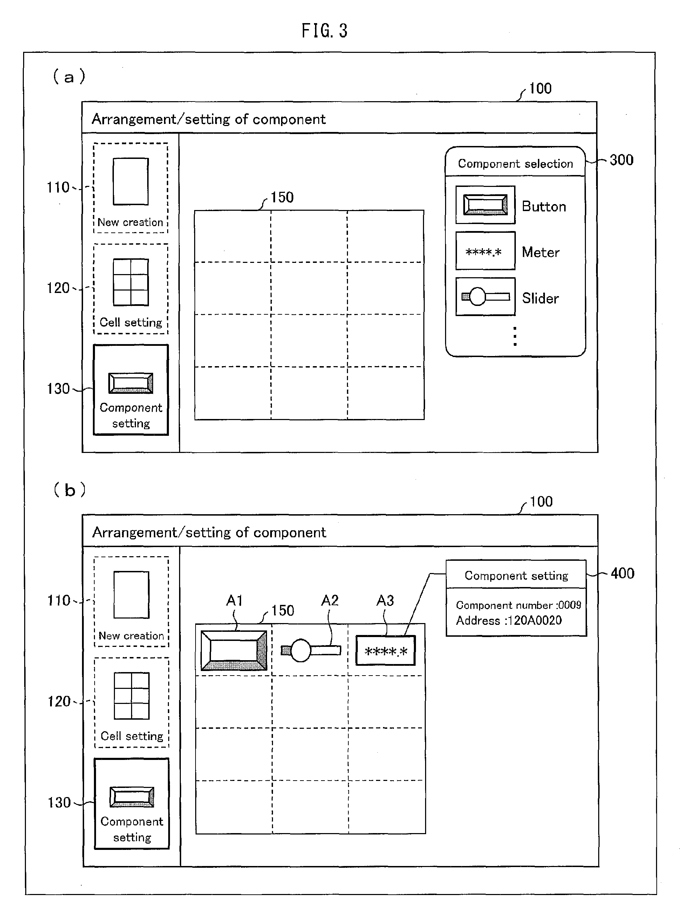

The data preparation section 20 then carries out component setting (a component arrangement and address definition) in accordance with a user's instruction operation. Fig. 3 is a view specifically illustrating an example in a case where the component setting section 22 carries out the component setting. (a) of Fig. 3 illustrates an example of an image displayed in a case where the component arrangement is carried out. (b) of Fig. 3 illustrates an example of an image in a case where the address definition is carried out with respect to a component which has been arranged.

In a case where a user selects a component setting icon 130 displayed on the side menu, the component setting section 22 of the data preparation section 20 controls the monitor 11 to display a component selection window 300 on the image creation window 100 (see (a) of Fig. 3).

The component selection window 300 is a sub-window via which a user selects a type of a component (a component image) to be arranged in a cell in the background image 150. For example, a thumbnail of a component image that is stored in the storage section 30, a name of the component image, and the like are displayed on the component selection window 300. The component setting section 22 causes a user to select one of the types of components displayed on the component selection window 300. The component setting section 22 then arranges the type of the component thus selected, which has been selected by the user by an operation of drag and drop or the like, in a cell specified by the pointing device in the background image 150. Note here that, as discussed in the description of Fig. 2, the entire background image 150 which has been subjected to the definition of the cell setting is divided into cells of which the number of rows and the number of columns have been defined. The component setting section 22 first determines in which cell in the background image 150 a component image of the component thus selected has been arranged. In doing so, the component setting section 22 determines that a cell including a point specified by a user's operation is the cell in which the component image is to be arranged. Examples of the point specified by the user's operation encompass a position where the user has dropped the component image (a point specified by the pointing device when the user has dropped the component image). That is, the user is sure to arrange each component image in a corresponding one of the cells.

In a case where the cell in which the component is to be arranged is determined, the component setting section 22 associates the component thus arranged with a cell number of the cell (a row number and a column number of the cell) in which the component image has been arranged. For example, provided that a type of component "button" in the component selection window 300 is selected and the type of component thus selected is then arranged in a cell specified by a first row and a first column, the component setting section 22 carries out the following processing. That is, the component setting section 22 (i) generates a type of component "button" (generates new component setting data for the component), (ii) associates information specifying the component with a cell number (row number 1, column number 1), and then (iii) controls the monitor 61 to display an image of the component in the cell specified by the first row and the first column. In this case, the component setting section 22 defines a display position and a display size of the component image in the cell so that the component image is displayed within the cell specified by the first row and the first column. Accordingly, the component image is displayed, within the cell, in the display position thus defined and with the display size thus defined. Specifically, the component setting section 22 defines an arrangement position of the component image in accordance with a size (a height and a width) of the cell in which the component image is to be arranged so that the component image is arranged in a center of the cell in which the component image is to be arranged. The component setting section 22 (i) defines a size of the component image in accordance with a size of the cell in which the component image is to be arranged so that the component image is displayed within the cell in which the component image is to be arranged and then (ii) displays the component image.

Note that, in accordance with a user's operation, the component setting section 22 can rearrange, in another cell, a component which has been arranged in a cell. In this case, the component setting section 22 alters an association of the component with a cell number so that the component is associated with a cell number of the another cell in which the component image is to be rearranged. Note that the component setting section 22 can alter a color, a shape, a display size, and the like of an arranged component in accordance with a user's input operation. The component setting section 22 can set a label such as text and/or a symbol on the component in accordance with the user's input operation.

The component setting section 22 further carries out address definition with respect to an arranged component. In a case where a user selects a component A3 in a state where components A1, A2, and A3 are arranged, the component setting section 22 controls an address definition window 400 regarding the component A3 to be displayed on the image creation window 100 (see an example illustrated in (b) of Fig. 3).

The address definition window 400 is a sub-window for defining an address to which is to be referred in a case where a selected component (the component A3 in the example in (b) of Fig. 3) is displayed or in a case where the selected component thus displayed is altered. For example, (i) a component number of the selected component and (ii) an entry field for entering an address to which the selected component refers are displayed on the address definition window 400. The component setting section 22 defines, as an address of the selected component, an address that a user has entered via the entry field. According to the example illustrated in (b) of Fig. 3, a component number of the component A3 is "0009" and an address to which the component A3 refers is "120A0020."

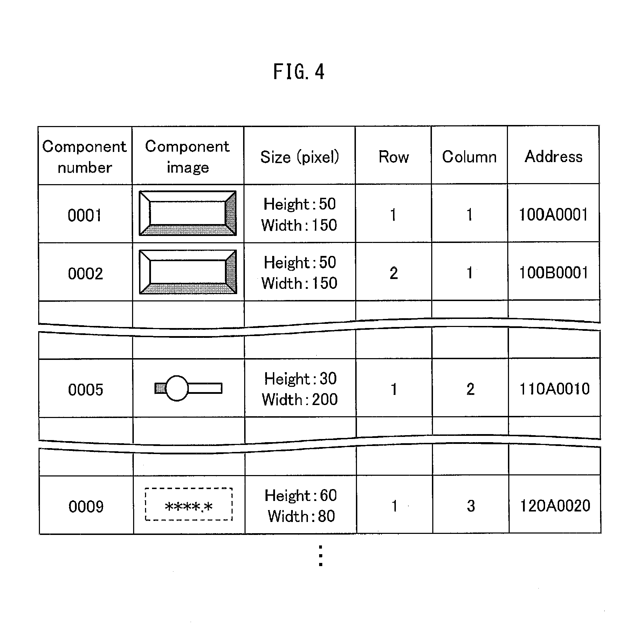

The component setting section 22 finally controls the storage section 30 to store therein, as component setting data, a result of the component arrangement and the address definition as described above. The following description will discuss in detail a data structure of the component setting data with reference to Fig. 4.

Fig. 4 is a view illustrating a data structure of the component setting data. Each row illustrated in Fig. 4 indicates component setting data of a component. There are provided a plurality of columns, i.e., (i) a "component number" column storing component numbers each of which uniquely indicates a corresponding component, (ii) a "component image" column indicating information specifying an image of each component, (iii) a "size" column indicating each display size of a corresponding component image, (iv) a "row" column indicating each row number of a cell in which a corresponding component is arranged, (v) a "column" column indicating each column number of a cell in which a corresponding component is arranged, and (vi) an "address" column indicating each address to which a corresponding component refers. The component setting data has a data structure in which information in the "component number" column is associated with each of information in other columns.

In a case where (i) a type of component is selected via the component selection window 300 illustrated in (a) of Fig. 3 and (ii) such a type of component is arranged in a cell in the background image 150, the component setting section 22 creates new component setting data (creates a new record) for the component and then assigns new component numbers in an order in which components are arranged in the respective cells. The component setting section 22 then associates, with the component number, (i) information specifying a component image which has been arranged, (ii) a display size of the component image which has been defined in accordance with a size of a cell in which the component image is to be arranged, and (iii) a row number and a column number of the cell in which the component image is to be arranged. In a case where a reference address is entered via the address definition window 400 illustrated in (b) of Fig. 3, the component setting section 22 associates information indicative of the reference address with the component number.

Note that the information in the "address" column is not essential to the component setting data. Specifically, in a case where a component image is an image of a component, such as a text box, which always displays given text, a given symbol, or the like, component setting data of such a component does not need to have any information in the "address" column.

As has been described with reference to Figs. 2 through 4, the PC 1 causes a user to make a determination of a size of a background image, a cell setting, a component arrangement, and an address definition, so as to prepare cell setting data and component setting data which are related to image display to be carried out by the programmable display device 2. In addition, in a case where a cell in which a component image is to be arranged is determined, the PC 1 can automatically defines a position and a size of the component image has been arranged so that the component image is displayed within the cell in which the component image has been arranged.

That is, the PC 1 automatically carries out precise position setting and size definition of a component image during creation of an image to be displayed by the programmable display device 2, so as to facilitate the creation of an image.

Note that, in a case where the cell setting section 21 carries out the component setting and then carries out the cell setting again (in a case where the cell setting section 21 alters (redefines) the cell setting), the cell setting section 21 notifies the component setting section 22 of (i) the number of rows, (ii) a height of each row, (iii) the number of columns, and (iv) a width of each column each of which has been subjected to a corresponding alteration. Upon receipt of such a notification, the component setting section 22 alters an arrangement position or a display size of the component image in accordance with the cell setting thus altered. For example, in a case where the cell setting section 21 alters a height of a row or a width of a column of a cell (i.e., a size of a cell) in which a component image is arranged, the component setting section 22 magnifies (or reduces) a size of the component image so that the component image is displayed within the cell which has been subjected to the alteration.

For example, in a case where the number of rows or the number of columns are altered while a component is arranged in a cell, (i) a position of the cell with which the component image is associated (a position of the cell in the background image 150) and (ii) a size of the cell are to be altered. In this case, the component setting section 22 alters a position and a size of the component image in accordance with an altered position and an altered size of the cell.

This allows the PC 1 to automatically alter an arrangement position and a size of the component image as appropriate in accordance with an alteration in cell setting which alteration is made by a user. In other words, in a case where a user alters the cell setting, the user does not need to carry out a precise position adjustment of and/or a size adjustment of the component image. Accordingly, the PC 1 facilitates creation of an image.

Moreover, the PC 1 can cause, in a case where a component arrangement is altered, a user to select, as a target to be moved, not a component but a cell itself so that the cell thus selected is moved together with a component image arranged in the cell.

Specifically, in a case where (i) a specific cell is selected in the cell setting and (ii) a given operation is conducted for moving the cell thus selected to a position in which another cell exists (e.g., an operation is conducted for dragging and dropping the cell thus selected outside a region of the cell, etc.), the cell setting section 21 alters a cell number of the cell thus selected (a target cell to be moved) to a cell number indicated by the cell located in a position in which the cell selected has been dropped. Accordingly, a position of the target cell which has been moved is altered to a position in which the cell selected has been dropped. In this case, (i) the cell setting section 21 notifies the component setting section 22 of an alteration in position of the target cell which has been moved (e.g., a cell number of the cell which has not been subjected to an alteration and a cell number of the cell which has been subjected to the alteration) and (ii) the cell setting section 21 alters, in accordance with the alteration in cell number of the target cell which has been moved, a cell number of a cell other than the target cell which has been moved. For example, the cell setting section 21 increments or decrements a row number and a column number of a cell other than the target cell which has been moved so that the cell is inserted in the position in which the target cell which has been moved has been dropped (in the position of a cell in which the cell to be moved has been dropped).

Upon receipt of such a notification, the component setting section 22 determines whether or not components are arranged in respective of (i) the target cell which has been moved and (ii) the cell whose cell number has been incremented or decremented by a movement of the target cell which has been moved. In a case where it is determined that a component is arranged in at least one of the cells, the component setting section 22 alters component setting data of the component. More specifically, the component setting section 22 alters, to a cell number of each cell which has been subjected to a position alteration, a cell number associated with a component number of the component thus arranged (a cell number of the cell which has not been subjected to the position alteration).

With the aforementioned processing, the component which has been arranged in a target cell which has been moved is continuously displayed in the target cell which has been moved even after the position of the target cell which has been moved is altered. In other words, the PC 1 can move a position of a component together with a position of a cell in which the component is arranged.

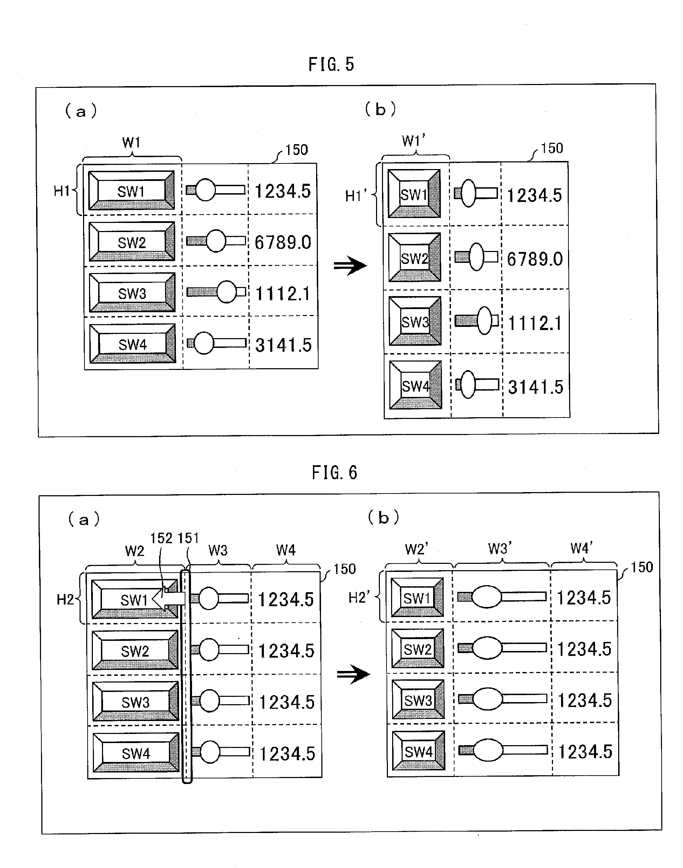

The following description will discuss in detail an operation and internal processing of the programmable display device 2 which has received a data file from the PC 1. First, the following description will discuss, with reference to Fig. 5, (i) processing in which the programmable display device 2 controls the display panel 61 to display an image in accordance with image data, cell setting data, and component setting data which are contained in the data file and (ii) an example of the image.

Upon a receipt of a data file via the reception section 50, the control section 70 of the programmable display device 2 controls the storage section 30 to store therein the data file. The control section 70 then reads out the data file stored in the storage section 30 in accordance with a user's instruction control or control, of the programmable display device 2 itself, such as turning on of a power supply.

Out of the data file thus read out, the control section 70 first compares a size of a background image indicated by image data with a screen size of the display panel 61. In a case where the size of the background image is equal to the screen size of the display panel 61, the control section 70 controls the display panel 61 to display an image including a component image arranged in each of cells. Each image of the component (i) is associated, in component setting data, with a corresponding one of cells divided in accordance with the number of rows, a height of each row, the number of columns, and a width of each column which are indicated by cell setting data and (ii) is arranged in the corresponding one of the cells.

On the other hand, in a case where the size of the background image indicated by the image data differs from the screen size of the display panel 61, the control section 70 alters the size of the background image, so as to be displayed in accordance with the size of the display screen of the display panel 61, and then controls the display panel 6 1 to display the background image whose size has been altered. The control section 70 calculates, for example, a ratio of a vertical length of the background image indicated by the data file to a vertical length of a screen of the display panel 61 (a vertical ratio), so as to determine a display magnification in a vertical direction. As with the vertical ratio, the control section 70 calculates, for example, a ratio of a horizontal length of the background image indicated by the data file to a horizontal length of the screen of the display panel 61 (a horizontal ratio), so as to determine a display magnification in a horizontal direction. The control section 70 controls the display panel 61 to display the background image indicated by the data file in a state where (i) the vertical length of the background image is magnified (or reduced) in accordance with the vertical ratio and (ii) the horizontal length of the background image is magnified (or reduced) in accordance with the horizontal ratio.

At this point , the cell setting alteration section 71 of the control section 70 alters cell setting, indicated by the cell setting data, in accordance with the vertical ratio and the horizontal ratio of the background image. The component setting alteration section 72 alters a component arrangement, indicated by the component setting data, in accordance with the cell setting which has been altered by the cell setting alteration section 71.

For example, the cell setting alteration section 71 alters, in accordance with the vertical ratio and the horizontal ratio, a height of each row and a width of each column, respectively, which are indicated by the cell setting data, instead of altering the number of rows and the number of columns indicated by the cell setting data. Specifically, for example, a height of each row can be calculated by multiplying, by the vertical ratio, the height of each row indicated by the cell setting data. Similarly, a width of each column can be calculated by multiplying, by the horizontal ratio, the width of each column indicated by the cell setting data.

Note that it is alternatively possible to fix at least either a height or a width of only a specific cell. In this case, even in a case where the size of the screen is altered, a height of the specific cell whose height has been fixed will never be altered.

The following description will more specifically explain with reference to Fig. 5. Fig. 5 is a view illustrating an example of an image which the programmable display device 2 displays. (a) of Fig. 5 illustrates an image to be displayed on the display panel 61 in a case where a size of the background image 150, which size has been determined by the PC 1, is equal to a size of a display screen of the display panel 61 of the programmable display device 2. On the other hand, (b) of Fig. 5 illustrates an image to be displayed on the display panel 61 in a case where the size of the background image 150, which size has been determined by the PC 1, differs from the size of the display screen of the display panel 61. Note that the image illustrated in (b) of Fig. 5 is an example of an image to be displayed in a case where the screen of the display panel 61 has (i) a vertical height higher than that of the background image 150 and (ii) a horizontal width shorter than that of the background image 150.

In a case where the image illustrated in (b) of Fig. 5 is compared with the image illustrated in (a) of Fig. 5, the image illustrated in (b) of Fig. 5 has the vertical height higher than that of the image illustrated in (a) of Fig. 5 and the horizontal width shorter than that of the image illustrated in (a) of Fig. 5. Accordingly, a size of a cell illustrated in (a) of Fig. 5, i.e., an original size of the background image 150, is altered to a size of a cell illustrated in (b) of Fig. 5. That is, the cell illustrated in (a) of Fig. 5 has a height H1 and a width W1 (a cell in a first row and a first column), whereas the cell illustrated in (b) of Fig. 5 has a height H1' and a width W1' (H1<H1', W1>W1').

At this point, the cell setting alteration section 71 notifies the component setting alteration section 72 that the cell setting indicated by the cell setting data has been altered. Upon receipt of such a notification, the component setting alteration section 72 magnifies or reduces a size of each component image, contained in the component setting data, in accordance with a size (a height and a width) of a cell in which the component is to be arranged. The component setting alteration section 72 displays the component image thus magnified or reduced in a cell associated with the component image in the component setting data (a cell generated in the cell setting altered by the cell setting alteration section 71).

With the aforementioned processing, in a case where the size of the background image 150 indicated by the image data differs from the size of the display screen of the display panel 61, the programmable display device 2 (i) controls the display panel 61 to display the background image in accordance with the size of the display screen, (ii) alters cell setting of each cell in accordance with the size of the background image (i.e., a size of the display screen), and (iii) alters a size of each component image arranged in a corresponding cell in accordance with an alteration in cell setting. Accordingly, the programmable display device 2 can control the display panel 61 to display a component in a suitable layout, regardless of the size of the display screen of the display panel 61.

On the other hand, the programmable display device 2 can alter cell setting and component setting of a data file in accordance with a user's given instruction operation. Note that the given instruction operation is not particularly limited to a specific one. Examples of the given operation can encompass an operation to be conducted with respect to an object displayed on the display panel 61. More specific examples of the "given operation" can encompass (i) an operation in which a given object (a component image, a dividing line of a cell, etc.) or region included in an image displayed on the display panel 61 is selected and then the given object or region thus selected is dragged and (ii) an operation in which the cell setting or the component setting is altered by entering a numeric value. Note that, in a case where an operation other than the given operation is conducted, the programmable display device 2 does not need to alter the cell setting and the component setting.

The following description will discuss, with reference to Fig. 6, processing to be carried out in a case where a cell setting, of an image which the programmable display device 2 controls the display panel 61 to display, is altered in accordance with a user's given operation. Fig. 6 is a view illustrating, in an image which the programmable display device 2 controls the display panel 61 to display, (i) an operation to be conducted in a case where a user alters the cell setting and (ii) the image which has been subjected to such an alteration. (a) of Fig. 6 is a view illustrating a user's instruction operation with respect to a cell displayed on the display panel 61 of the programmable display device 2. On the other hand, (b) of Fig. 6 illustrates an image to be displayed on the display panel 61 after the instruction operation illustrated in (a) of Fig. 6 is conducted.

As illustrated in (a) of Fig. 6, in a case where a user (i) selects a dividing line 151 of a cell of an image displayed on the display panel 61 (a boundary line between cells in a first column and cells in a second column) and then (ii) drags such a dividing line in a left direction (a direction of an arrow 152), the control section 70 alters the cell setting and the component setting and then controls the display panel 61 to display an image as illustrated (b) of Fig. 6.

More specifically, the cell setting changing section 71 of the control section 70 first (i) alters a width W2 of a cell in a first column to a width W2' which is reduced by a length dragged by the user and then (ii) alters a width W3 of a cell in a second column to a width W3' which is increased by a reduction caused in a case where the width W2 becomes the width W2'. On the other hand, the cell setting alteration section 71 maintains, as W4, a width of a cell in a third column which cell is not related to an instruction of altering the cell setting (drag).

The cell setting alteration section 71 notifies the component setting alteration section 72 of such an alteration in widths of the cells (an alteration in cell setting). Upon receipt of such a notification of the alteration, the component setting alteration section 72 reduces or magnifies widths of components, arranged in respective cells (cells in a first column and a second column), in accordance with the widths of the respective cells.

As a result, the cell setting alteration section 71 (i) alters, to W2', the width of the cell in the first column which cell is related to the boundary line dragged by the user and (ii) alters, to W3', the width of the cell in the second column. The component setting alteration section 72 (i) reduces a width of a component (a button) in the first column in accordance with the width W2' of the cell and (ii) increases a width of a component (slider) in a second column in accordance with the width W3' of the cell.

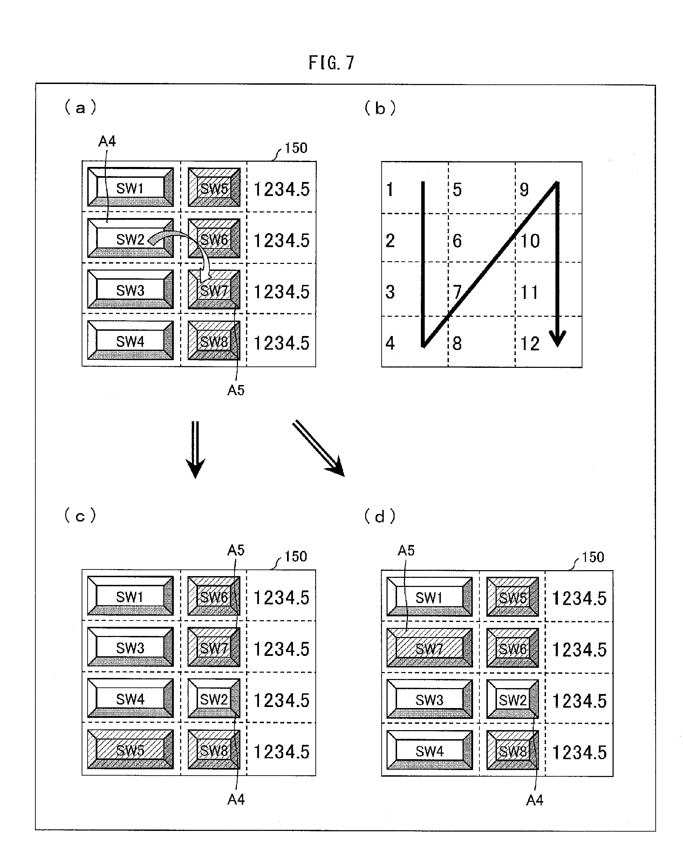

The following description will discuss, with reference of Fig. 7, (i) processing to be carried out in a case where the control section 70 alters component setting of an image displayed on the display panel 61 and (ii) an example of such an image. Fig. 7 is a view illustrating, in an image which the programmable display device 2 controls the display panel 61 to display, (i) an operation to be conducted in a case where a user alters the component setting and (ii) the image which has been subjected to such an alteration. (a) of Fig. 7 is a view illustrating a user's instruction operation with respect to a component displayed on the display panel 61 of the programmable display device 2. (c) and (d) of Fig. 7 each illustrate an example of an image to be displayed on the display panel 61 after the user's instruction operation illustrated in (a) of Fig. 7 is conducted. On the other hand, (b) of Fig. 7 schematically illustrates an order in which cells are arranged in respective images illustrated in (a), (c), and (d) of Fig. 7.

Provided that a user selects a component A4 displayed on the display panel 61 and then drags and drops the component A4 to a cell in which a component A5 is displayed (see (a) of Fig. 7), the component setting alteration section 72 of the control section 70 first refers to component setting data contained in a data file, so as to specify a cell in which the component A4, that has been dragged and dropped (the target component A4 which has been moved), is arranged (a row number and a column number of the cell). The component setting alteration section 72 then specifies a cell in which the component A4 has been dropped. Specifically, the component setting alteration section 72 specifies, on the basis of the component setting data, the cell in which the component A5 is arranged.

Subsequently, the component setting alteration section 72 considers the cell in which the component A4 is to be arranged (a row number and a column number of the cell) as a cell in which the component A5 is arranged. In the cell in which the component A4 was arranged (a first column), a component, which has been arranged in a cell in a next row and in the first column, is arranged. The component setting alteration section 72 shifts components which are to be arranged in respective cells, in accordance with a predetermined order, in which cells are arranged, such as an order schematically illustrated in (b) of Fig. 7. As a result, the control section 70 controls the display panel 61 to display an image illustrated in (c) of Fig. 7.

Note that, in a case where an order of cells as one illustrated in (b) of Fig. 7 is not set, the component setting alteration section 72 can replace the component A4 that a user has dragged and dropped with the component A5 arranged in a cell in which the component A4 is to be dropped. That is, the component setting alteration section 72 can specify, on the basis of the component setting data, a cell in which the component A4 has been arranged and a cell in which the component A5 has been arranged and then arrange the component A4 in the cell in which the component A5 has been arranged and arrange the component A5 in the cell in which the component A4 has been arranged. The component setting alteration section 72 thus replaces the arrangement of the component A4 with the arrangement of the component A5, so that the control section 70 controls the display panel 61 to display the image illustrated in (d) of Fig. 7.

As with the PC 1, in a case where the programmable display device 2 changes a component arrangement, the programmable display device 2 can alternatively causes a user to select, as a target to be moved, not a component but a cell itself so that a cell thus selected is moved together with a component image which has been arranged in the cell.

Specifically, in a case where (i) a specific cell is selected in the cell setting and (ii) a given operation is conducted for moving the cell thus selected to a position in which another cell exists (e.g., an operation is conducted for dragging and dropping the cell thus selected outside a region of the cell, etc.), the cell setting alteration section 71 alters a cell number of the cell thus selected to a cell number indicative of a position to which the cell has been moved. This causes a position of the cell thus selected to be altered to a position of a cell. Then, the cell setting alteration section 71 notifies the component setting alteration section 72 of an alteration in the position of the cell. The cell setting alteration section 71 then alters, in accordance with the alteration in cell number of the target cell which has been moved, a cell number of a cell other than the target cell which has been moved. For example, the cell setting alteration section 71 increments or decrements a row number and a column number of a cell other than the target cell which has been moved so that the cell is inserted in the position in which the target cell which has been moved has been dropped (in the position of a cell in which the cell to be moved has been dropped).

Upon receipt of such a notification, the component setting alteration section 72 determines whether or not components are arranged in respective of (i) the target cell which has been moved and (ii) the cell whose cell number has been incremented or decremented by a movement of the target cell which has been moved. In a case where it is determined that a component is arranged in at least one of the cells, the component setting alteration section 72 alters component setting data of the component. More specifically, the component setting alteration section 72 alters, to a cell number of each cell which has been subjected to a position alteration, a cell number associated with a component number of the component thus arranged.

With the aforementioned processing, the component which has been arranged in a cell which has been selected and moved to be displayed in the target cell which has been moved even after the cell is moved. In other words, the programmable display device 2 can move a position of a component together with a cell in which the component is arranged. Note that, in a case where an operation other than the given operation is conducted, the cell setting alteration section 71 does not need to alter the cell setting and the component setting alteration section 72 does not need to alter the component setting.

As has been discussed above with reference to Figs. 6 and 7, the programmable display device 2 alters the cell setting and the component setting in accordance with a user's given instruction operation and then controls the display panel 61 to display an image in accordance with the cell setting and the component setting thus altered. That is, the programmable display device 2 itself can (i) change the cell setting and the component setting which has been set with respect to image data by the PC 1 and then (ii) display the image data in accordance with the cell setting and the component setting thus altered. This allows, a user of, for example, the programmable display device 2 to alter a layout of an image contained in an existing data file (a cell setting and a component setting) and use the layout thus altered.

An image to be displayed on the display panel 61 is divided into cells, and the programmable display device 2 alters, in accordance with an alteration in cell setting (e.g., a width of a cell, etc.), a position or a size of a component arranged in a cell which is subjected to such an alteration. This eliminates the user's necessity of precisely adjusting a layout of each component in the image. In other words, the user of the programmable display device 2 can easily alter an image which the programmable display device 2 displays.

### [Variation]

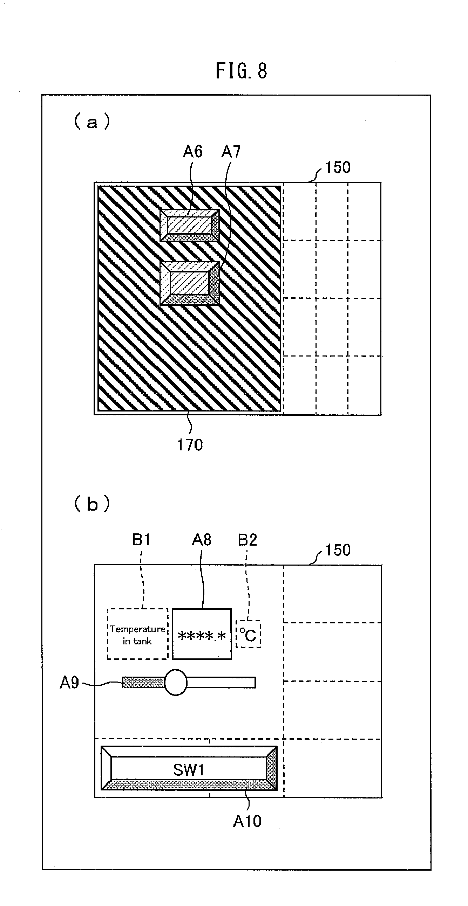

Note that each of the cell setting section 21 and the component setting section 22 in accordance with the present embodiment can carry out cell setting and component setting other than the aforementioned cell setting and component setting. The following description will discuss another example of cell setting and component setting with reference to Fig. 8. Fig. 8 is a view illustrating another example of the cell setting and the component setting in the PC 1.

According to the present embodiment, the cell setting section 21 of the PC 1 can divide an entire region of a background image 150 into (i) cells in different sizes as well as (ii) cells in an arbitrary number of rows and an arbitrary number of columns. More specifically, the cell setting section 21 can define a cell in which a plurality of cells are combined (a combined cell, a combined region), for example, like a cell 170 illustrated in (a) of Fig. 8. In this case, the cell setting section 21 defines, as a single combined cell, an arbitrary number of adjacent cell(s) selected by the user. The cell setting section 21 further puts, in cell setting data of each cell in the combined cell, a positional relation of the cell in the combined cell. Specifically, the cell setting section 21 can put, in the cell setting data, (i) information indicating that each cell included in the combined cell belongs to the combined cell and (ii) a row number and a column number of the cell in the combined cell. In a case where a position of the combined cell is altered (in a case where a cell in the combined cell is selected and moved) due to an alteration in cell setting or the like, the position of the combined cell is (positions of all cells included in the combined cell are) moved in a state where a positional relation in the combined cell is maintained. In a case where a component is arranged in the combined cell, the component setting section 22 can alter a display size of a component image so that the component image is displayed within the combined cell, i.e., in a region which is obtained by adding regions of all the cells in the combined cell.

The cell setting section 21 can carry out, as one (1) processing of the cell setting, an insertion of, a deletion of, a copy of, or a paste of a row, a column, or a cell as well as a definition of the number of rows of cells and the number of columns of cells.

Alternatively, the cell setting section 21 can secure a part of region of the background image 150, which part allows a user to freely adjust, in a pixel unit or the like, a positional relation of a component(s) arranged in the part of the region. For convenience, the region is hereinafter referred to as a "free arrangement region." For example, in a case where the cell 170 illustrated in (a) of Fig. 8 is assumed to be a free arrangement region, the component setting section 22 puts, in cell setting data, a component(s) which is to be arranged in a region in the cell 170 (e.g., components A6 and A7), on the basis of (i) a cell (the cell 170) in an arrangement position of the component and (ii) a position itself in which a component has been arranged by a user's operation such as a pixel unit.

According to the present embodiment, the component setting section 22 of the PC 1 can arrange a plurality of components (components A8, A9, B1, and B2) in a cell, as illustrated in, for example, (b) of Fig. 8. Alternatively, the component setting section 22 can arrange a component (component A10) so that the component extends over a plurality of cells. In a case where the component setting section 22 arranges a component in a cell, the component setting section 22 can further define a color, a size, a shape, and/or an arrangement manner in the cell (a top alignment, a bottom alignment, a right alignment, a left alignment, etc.) of the component thus arranged. These settings are put in the component setting data.

According to the present embodiment, (i) the cell setting which is alterable by the cell setting alteration section 71 of the programmable display device 2 and (ii) the component setting which is alterable by the component setting alteration section 72 are not limited to the scope of the aforementioned embodiment. For example, the cell setting alteration section 71 can be configured to alter all types of data contained in the cell setting data received from the PC 1. Alternatively, the component setting alteration section 72 can be configured to alter all types of data contained in the component setting data received from the PC 1.

According to the present embodiment, the data preparation section 20 can have a diagram creation function, a component image creation function, and a text creation function. The diagram creation function is a function of creating an image of a diagram (a diagram image) such as a quadrilateral or a circle. The component image creation function is a function of creating a component image indicating a component which has a specific function (a button, a switch, a lamp, a meter, etc.). The text creation function is a function of creating an image of text (a text box) entered via a text entry frame. In a case where the data preparation section 20 has these functions, the storage section 30 can store therein an image of a created diagram, a created component image, and created text and the component setting section 22 can use, as objects to be arranged, the image of the created diagram, the created component image, and the created text.

According to the present embodiment, the control section 70 of the programmable display device 2 can be configured to write (overwrite) (i) the cell setting altered by the cell setting alteration section 71 and (ii) the component setting altered by the component setting alteration section 72 in the cell setting data and the component setting data, respectively, in the data file, instead of controlling the storage section 80 to store therein, as "alteration data," (a) the cell setting altered by the cell setting alteration section 71 and (b) the component setting altered by the component setting alteration section 72.

The PC 1 and the programmable display device 2 can be configured such that (i) after a component is arranged in a first cell, the PC 1 and the programmable display device 2 each specify a second cell located on a left of the first cell and (ii) the component is arranged to extend over the first cell and the second cell. This causes no alteration in height of the component but allows the component to have identical widths in the first and second cells. In this case, the first and second cells, adjacent to each other in a horizontal direction, can be configured not to be combined and be treated as independent cells.

### [Software realization example]

Note that a function of the data preparation section 20 of the PC 1 and a function of the control section 70 of the programmable display device 2 can be realized by hardware (a logic circuit provided in an integrated circuit or the like) or can be realized by a program of software which realizes each function.

In the latter case, the PC 1 or the programmable display device 2 includes a non-transitory tangible storage medium which stores the program and each data, a RAM, a CPU, and the like. Moreover, the PC 1 or the programmable display device 2 reads out the program from a storage medium, causes the program to be developed in a RAM, and causes the CPU to execute the program, so as to realize a function of the data preparation section 20 or the control section 70. Note that the program can be supplied or made available to the PC 1 or the programmable display device 2 via a transmission medium such as a communication network and a broadcast wave. The present invention can be also realized in the form of a data signal embedded in a carrier wave which is embodied by electronic transmission.

The following description will discuss another embodiment of the present invention with reference to Fig. 1. As illustrated in Fig. 1, a PC 1 (an image data creation device) of the present embodiment includes: a cell setting section 21 (a rectangular region setting section) which divides a background image which is an image displayed, as a background, on a programmable display device 2 into a plurality of rectangular regions and defines a position and a size of each of the plurality of rectangular regions; and a component setting section 22 which, in a case where an operation, in which a component image, which is an image of a component that is at least one of an object for having a given function and an object for displaying given data, is arranged with respect to the background image, is conducted, (a) determines in which one of the plurality of rectangular regions the component image should be arranged, (b) defines component setting in which the rectangular region which is in the background image and in which the component image has been arranged is associated with the component image, and (c) carries out setting so that the component image is displayed, in the rectangular region with which the component image is associated in the component setting, in a position or a size in accordance with a size of the rectangular region.

With the configuration, the PC 1 divides the background image into the plurality of rectangular regions. In a case where the component image is arranged in a corresponding one of the plurality of rectangular regions, the PC 1 (i) determines a rectangular region in which the component image is to be arranged and (ii) associates the component image which has been arranged with the rectangular region thus determined. In a case where the component image is arranged, the PC 1 can properly define a position and a size of the component thus arranged in accordance with the rectangular region in which the component image has been arranged. Accordingly, a user can define an arrangement of a component by arranging each component in a corresponding one of predivided rectangular regions, without carrying out precise definition of an arrangement position or a size of the component image. Accordingly, the PC 1 can more simplify creation of data related to an image to be displayed by the programmable display device 2.

In the PC 1, in a case where the cell setting section 21 redefines a size of the rectangular region after the component setting section 22 defines the component setting, the component setting section 22 carries out setting so that the component image is displayed in a position or a size in accordance with the size of the rectangular region thus redefined.

With the configuration, the PC 1 can later redefine (alter) the size of the rectangular region. For example, the PC 1 can redefine the size of the rectangular region after the component image is once arranged. Moreover, a control section 70 (display control section) can alter (resize) the size of the component image in accordance with the size of the rectangular region thus altered.

Accordingly, even in a case where the PC 1 alters the size of the rectangular region after the component is arranged, the PC 1 does not need to cause a user to carry out a precise size adjustment of the component image. Accordingly, the PC 1 can more simplify creation of data related to an image to be displayed by the programmable display device 2.

In the PC 1, in a case where the cell setting section 21 redefines a position of the rectangular region after the component setting section 22 defines the component setting, the component setting section 22 carries out setting so that the component image is displayed in a position in accordance with the position of the rectangular region thus redefined.

With the configuration, the PC 1 can later redefine (alter) the position of the rectangular region. In this case, the cell setting section 21 redefines the size of the rectangular region as well as the position of the rectangular region. The cell setting section 21 (i) redefines the position of the rectangular region after the component image is arranged and then (ii) alters the position (and the size) of the component image in accordance with the alteration in position (and size) of the rectangular region. In other words, in a case where the PC 1 alters the position of the rectangular region after the component is arranged, the PC 1 can alters the position of the component image together with the rectangular region. In other words, the PC 1 does not need to cause a user to carry out a position adjustment of the component image in accordance with the alteration in position of the rectangular region. This allows the PC 1 to more simplify creation of data related to an image to be displayed by the programmable display device 2.

A programmable display device 2 of the present embodiment includes: a storage section which stores therein (a) a position and a size of the rectangular region in the background image which rectangular region is defined by the cell setting section 21 (rectangular region setting section) of the PC 1 (image data creation device) and (b) the component setting defined by the component setting section 22; a cell setting alteration section 71 (rectangular region setting alteration section) which is capable of altering at least one of the position and the size of the rectangular region stored in the storage section, in accordance with (i) a screen size of a display section or (ii) an operation to be conducted with respect to an object displayed by the display section; and a control section 70 (display control section) which controls the display section to display the component image, in the rectangular region with which the component image is associated in the component setting, in a position or a size in accordance with at least one of a position and a size of the rectangular region which has been altered by the cell setting alteration section 71.

With the configuration, the programmable display device 2 can alter the size of the rectangular region in accordance with the screen size of the display section. The programmable display device 2 can further alter the arrangement position and the size of the component image in accordance with the size of the rectangular region thus altered and display the component image. That is, the programmable display device 2 can properly alter the arrangement position and the size of the component image in accordance with the screen size of the display section.

With the configuration, the programmable display device 2 can alter, in accordance with a user's operation conducted with respect to the programmable display device 2, a definition of the rectangular region which has been set by the PC 1. The programmable display device 2 can then alter the position and the size of the component image in accordance with the position and the size thus altered and display the component image. Accordingly, the programmable display device 2 can (i) cause a user to easily alter an existing setting by which the background image is divided into the rectangular regions and (ii) properly alters the position and the size of the component image in accordance with the rectangular region thus altered and display the component image.

In the programmable display device 2, in a case where the cell setting alteration section 71 has altered the position of the rectangular region, the cell setting alteration section 71 is capable of altering the size of the rectangular region in accordance with the position of the rectangular region thus altered.

With the configuration, the programmable display device 2 can adjust the size of the rectangular region in accordance with an alteration in position of the rectangular region. Accordingly, the programmable display device 2 can allows a user to easily alter data related to an image which the programmable display device 2 displays.

A programmable display device 2 of the present embodiment includes: a storage section 80 which stores therein (a) a position and a size of the rectangular region which is defined by the cell setting section 21 (rectangular region setting section) of the PC 1 (image data creation device) and (b) the component setting defined by the component setting section 22; a component setting alteration section 72 which alters, in accordance with an operation to be conducted with respect to an image displayed by the display section, the component setting stored in the storage section 80; and a control section 70 (display control section) which controls the display section to display the component image in the rectangular region with which the component image is associated in the component setting altered by the component setting alteration section 72, in a position or a size in accordance with a size of the rectangular region which size is stored in the storage section 80.

With the configuration, the programmable display device 2 can alter, in accordance with a user's operation, an association of the component image with the rectangular region, i.e., an arrangement position of the component image. Accordingly, the programmable display device 2 can alter, in accordance with the user's operation conducted by use of the programmable display device 2, the arrangement of the component image which arrangement has been defined by the PC 1. Accordingly, the programmable display device 2 can allows a user to easily alter an existing component arrangement so that the component image is displayed in the position thus altered.

The PC 1 and the programmable display device 2 may be each realized by a computer. In this case, the present invention encompasses: a control program for each of the PC 1 and the programmable display device 2 which program causes a computer to operate as each section of each of the PC 1 and the programmable display device 2 so that the PC 1 and the programmable display device 2 can be each realized by the computer; and a computer-readable storage medium storing the control program therein.

Moreover, in the PC 1, (i) in a case where (a) the cell setting section 21 defines a combined region which is obtained by adding the plurality of rectangular regions adjacent to each other and (b) the cell setting section 21 redefines a position or a size of one of rectangular regions included in the combined region, the cell setting section 21 alters, in accordance with a positional relation of each rectangular region in the combined region, positions of all the rectangular regions included in the combined region and (ii) in a case where the component image is arranged in the combined region in the background image, the component setting section 22 carries out setting so that the component image is displayed on the display section in a position or a size in accordance with the size of the combined region.

With the configuration, the PC 1 can combine the plurality of rectangular regions so as to be the combined region, so that the combined region can be treated as one (1) rectangular region in a case where a definition of the position or the like of the rectangular region is altered. A position and a size of the component image arranged in the combined region can be determined in accordance with a position and a size of the combined region. Accordingly, the PC 1 can more simplify creation of data related to an image to be displayed by the programmable display device 2.

Note that the programmable display device 2 can (i) define the combined region and (ii) alter such a definition. In this case, the cell setting alteration section 71 and the component setting alteration section 72 of the programmable display device 2 can carry out processing control as with processing control of the cell setting section 21 and the component setting section 22 of the PC 1, respectively.

The present invention is not limited to the description of each of the embodiments and the variation above, but may be altered by a person skilled in the art within the scope of the claims. An embodiment derived from a proper combination of technical means disclosed in each of the embodiments and the variation is encompassed in the technical scope of the present invention.

For example, the present invention can be configured such that a component image has size information on an initial setting and the size information is altered as appropriate when the component image is arranged in a cell. In this case, the present invention can be configured such that in a case where a component image is arranged to extend over a plurality of cells, a cell in which the component image is to be arranged is determined so that (i) the component image is arranged in a cell in which an area overlapping with a component image is largest or (ii) for example, the component image is arranged in a cell in which center coordinates or representative coordinates of the component image are located.

### Industrial Applicability

The present invention is applicable to an image data creation device which creates an image and a programmable display device which displays the image.

### Reference Signs List

1: PC (image data creation device)
2: Programmable display device
20: Data preparation section
21: Cell setting section (rectangular region setting section)
22: Component setting section
61: Display panel (display section)
70: Control section (display control section)
71: Cell setting alteration section (rectangular region setting alteration section)
72: Component setting alteration section
80: Storage section

## Claims

1. An image data creation device comprising:
a rectangular region setting section which divides a background image which is an image displayed, as a background, on a programmable display device into a plurality of rectangular regions and defines a position and a size of each of the plurality of rectangular regions; and
a component setting section which, in a case where an operation, in which a component image, which is an image of a component that is at least one of an object for having a given function and an object for displaying given data, is arranged with respect to the background image, is conducted, (a) determines in which one of the plurality of rectangular regions the component image should be arranged, (b) defines component setting in which the rectangular region which is in the background image and in which the component image has been arranged is associated with the component image, and (c) carries out setting so that the component image is displayed, in the rectangular region with which the component image is associated in the component setting, in a position or a size in accordance with a size of the rectangular region.

2. The image data creation device as set forth in claim 1, wherein, in a case where the rectangular region setting section redefines a size of the rectangular region after the component setting section defines the component setting, the component setting section carries out setting so that the component image is displayed in a position or a size in accordance with the size of the rectangular region thus redefined.

3. The image data creation device as set forth in claim 1 or 2, wherein, in a case where the rectangular region setting section redefines a position of the rectangular region after the component setting section defines the component setting, the component setting section carries out setting so that the component image is displayed in a position in accordance with the position of the rectangular region thus redefined.

4. A programmable display device comprising:
a storage section which stores therein (a) a position and a size of the rectangular region in the background image which rectangular region is defined by the rectangular region setting section of an image data creation device recited in any one of claims 1 through 3 and (b) the component setting defined by the component setting section;
a rectangular region setting alteration section which is capable of altering at least one of the position and the size of the rectangular region stored in the storage section, in accordance with (i) a screen size of a display section or (ii) an operation to be conducted with respect to an object displayed by the display section; and
a display control section which controls the display section to display the component image, in the rectangular region with which the component image is associated in the component setting, in a position or a size in accordance with at least one of a position and a size of the rectangular region which has been altered by the rectangular region setting alteration section.

5. The programmable display device as set forth in claim 4, wherein in a case where the rectangular region setting alteration section has altered the position of the rectangular region, the rectangular region setting section is capable of altering the size of the rectangular region in accordance with the position of the rectangular region thus altered.

6. A programmable display device comprising:
a storage section which stores therein (a) a position and a size of the rectangular region which is defined by the rectangular region setting section of an image data creation device recited in any one of claims 1 through 3 and (b) the component setting defined by the component setting section;
a component setting alteration section which alters, in accordance with an operation to be conducted with respect to an image displayed by the display section, the component setting stored in the storage section; and
a display control section which controls the display section to display the component image in the rectangular region with which the component image is associated in the component setting altered by the component setting alteration section, in a position or a size in accordance with a size of the rectangular region which size is stored in the storage section.
